# FASCICULE DE BREVET EUROPEEN

(11) **EP 0 881 029 B1**
(45) Date de publication et mention de la délivrance du brevet: **11.12.2002**
(21) Numéro de dépôt: 98401056.1
(22) Date de dépôt: 30.04.1998
(51) Int. Cl.: B23P 19/08, B23P 19/00, B65G 59/06

(54) **Dispositif de dépilement d'éléments écarteurs entrant dans la constitution d'un segment racleur d'huile**
Vorrichtung zum Entstapeln von Ausdehnungselementen für die Erstellung von einem Ölabstreifring
Device for destacking of spacer elements for the consitution of an oil scraping ring

(30) Priorité: 27.05.1997 FR 9706473
(43) Date de publication de la demande: 02.12.1998
(73) Titulaire: Renault Automation Comau, 92365 Meudon La Forêt Cedex (FR)
(72) Inventeur: Thurier, Yvan, 94320 Thiais (FR)
(74) Mandataire: Robert, Jean-Pierre

(56) Documents cités:
- EP-A- 0 369 855
- EP-A- 0 457 627
- EP-A- 0 526 329
- US-A- 4 047 276
- PATENT ABSTRACTS OF JAPAN vol. 004, no. 041 (M-005), 29 mars 1980 -& JP 55 011773 A (TAKAGI SEISAKUSHO:KK), 26 janvier 1980
- PATENT ABSTRACTS OF JAPAN vol. 095, no. 010, 30 novembre 1995 -& JP 07 185950 A (HONDA MOTOR CO LTD), 25 juillet 1995

## Description

La segmentation d'un piston de moteur thermique à combustion interne est réalisée au moyen d'outils automatisés qui extraient chaque segment d'une pile par l'intermédiaire de tiroirs ou poussoirs appropriés pour les conduire dans une zone de montage où ils sont maintenus en regard des gorges du piston qu'ils doivent équiper.

Aujourd'hui, le segment de piston dit segment racleur d'huile est réalisé en trois éléments : deux éléments de segment minces et un élément intercalaire ou écarteur, disposés entre eux dans une gorge du piston qui accueille l'ensemble. Cet écarteur est de forme très particulière ; il est ondulé de sorte que, dans une pile, ses ondulations sont imbriquées dans celles des écarteurs qui l'encadrent. Il n'est donc pas possible d'extraire un écarteur d'une pile par un simple mouvement de poussée perpendiculaire à l'axe de la pile. Il faut d'abord désimbriquer l'écarteur situé à la base de la pile de l'écarteur qui le surmonte dans un mouvement parallèle à l'axe de la pile pour ensuite l'entraîner dans un mouvement translatif horizontal (si la pile est verticale) au moyen d'un tiroir.

La présente invention a pour objet un mécanisme d'extraction d'un élément écarteur situé à la base d'une pile verticale pour le transférer d'une manière certaine sur un support assurant son transport horizontal jusqu'au poste de son insertion dans une gorge du piston qu'il doit équiper.

Ces éléments écarteurs sont en général conditionnés en cartouche, c'est-à-dire par empilement sur des chemises tubulaires en carton dont le diamètre extérieur est supérieur au diamètre intérieur de chaque élément à l'état libre. Le contenu de ces cartouches est ensuite transféré sur une chemise cylindrique métallique ; les écarteurs entourant cette chemise métallique sont en permanence sollicités vers le bas, le sommet de leur pile supportant une charge à cet effet formée par un anneau pesant.

Le mécanisme de l'invention consiste donc, à la base de la chemise cylindrique formant magasin vertical pour les éléments écarteurs, en :
- un mandrin de préhension dilatable et rétractable radialement situé à la base de la chemise, ayant une pluralité de doigts, chaque doigt présentant une surface verticale et une élément de collerette à la base de cette surface verticale et en saillie radiale par rapport à celle-ci et étant mobile entre une première position dans laquelle la surface verticale est pratiquement dans le prolongement de la surface extérieure de la chemise et une seconde position dans laquelle cette surface est en retrait radial par rapport à cette surface extérieure de la chemise,
- des moyens pour déplacer le mandrin le long de l'axe de la chemise entre une première position dans laquelle les doigts prolongent la chemise et une seconde position dans laquelle ils en sont axialement éloignés,
- un tiroir d'évacuation de l'élément écarteur situé, dans une position de réception, à l'aplomb de la chemise cylindrique, ce tiroir présentant des appuis radiaux fixes angulairement décalés par rapport aux doigts du mandrin sur lesquels vient se contracter l'élément écarteur lorsque le mandrin est amené dans sa deuxième position et lorsque les doigts du mandrin sont dans leur position de retrait,
- des mâchoires extérieures de pincement des éléments écarteurs situés au pied de la pile contre la chemise cylindrique.

D'autres caractéristiques et avantages de l'invention ressortiront de la description donné ci-après d'un de ses modes de réalisation.

Il sera fait référence aux dessins annexés, parmi lesquels :
- la figure 1 est une vue partielle d'un élément écarteur mis en oeuvre dans la segmentation d'un piston,
- la figure 2 est une vue schématique partielle de deux éléments écarteurs adjacents imbriqués l'un dans l'autre tels qu'ils le sont dans une pile,
- la figure 3 est un schéma du dispositif selon l'invention,
- la figure 4 est une vue partielle de dessus du tiroir appartenant au dispositif de la figure 3.

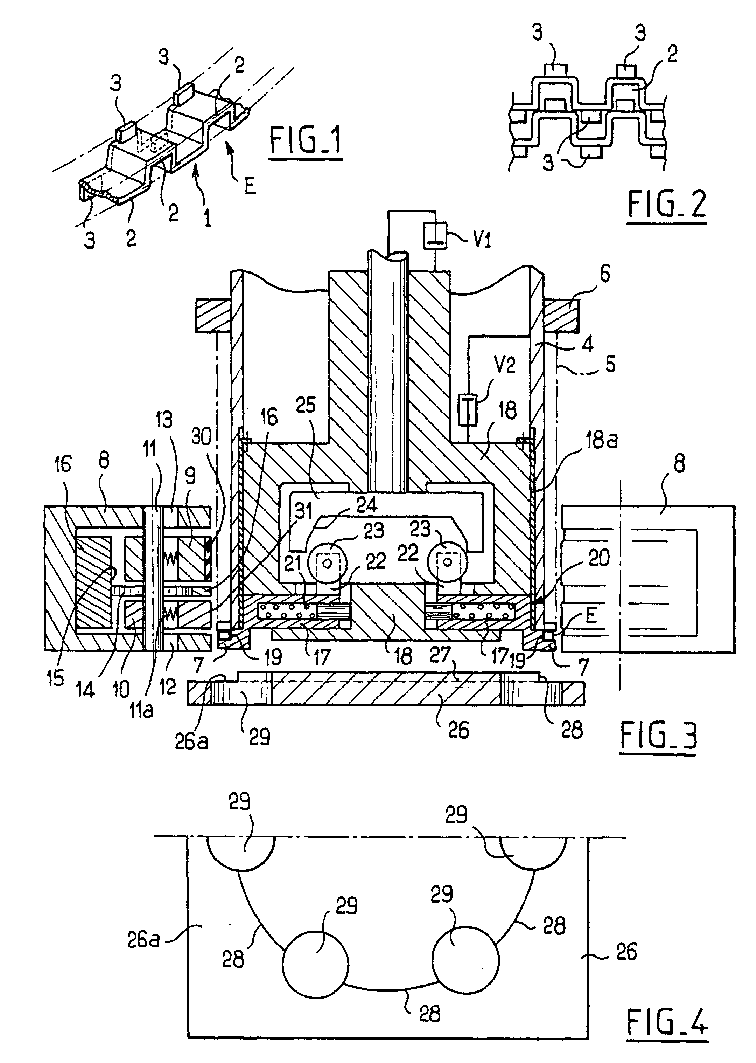

Un écarteur E tel qu'il est utilisé pour la réalisation du segment racleur d'huile d'un piston est constitué par une lame 1 déformée en créneau 2, chacun des sommets des créneaux étant pourvu d'une patte 3 faisant saillie vers l'extérieur. La figure 1 illustre de manière partielle la constitution d'un tel élément. Cette bande est refermée sur elle-même autour d'un axe qui est perpendiculaire au plan des sommets des créneaux formant ainsi une bague élastique fendue de sorte que son bord intérieur et son bord extérieur s'étendent dans deux surfaces cylindriques concentriques. Les pattes 3 sont situées au bord de la surface cylindrique intérieure.

On voit de la figure 2 que deux écarteurs empilés l'un sur l'autre sont imbriqués au moins par pénétration de leur patte 3 à l'intérieur des créneaux. Il n'est donc pas possible de faire glisser l'un des écarteurs par rapport à l'autre pour les séparer uniquement par un mouvement translatif perpendiculaire à leur axe. Il est nécessaire d'abord de les séparer axialement pour supprimer leur imbrication mutuelle.

Le dispositif selon l'invention est représenté à la figure 3. Il comporte principalement une chemise tubulaire 4 fixe autour de laquelle sont empilés les éléments écarteurs. La pile est notée 5 sur la figure. Elle est surmontée d'un anneau pesant coulissant 6 dont le poids tend à faire glisser l'ensemble de la pile 5 vers le bas en direction d'un épaulement de retenue 7 extérieur à la chemise 4 dont la structure et la forme seront expliquées ci-après.

Le dispositif de l'invention comporte également en regard de la partie inférieure de la pile 5, des mâchoires de pincement des éléments écarteurs contre la chemise. Dans le mode de réalisation représenté, les mâchoires de pincement sont régulièrement réparties radialement à l'intérieur d'un bâti 8 en forme de couronne circulaire entourant le pied de la chemise 4. A la figure, une seule mâchoire est représentée en partie de gauche. Elle est formée de deux patins 9 et 10 superposés verticalement montés à coulissement radial à l'intérieur de la couronne 8 et attelée à un élément de commande de leur position rapprochée ou écartée de la chemise 4. Ainsi chaque patin 9 et 10 est traversé par un axe vertical 11 qui peut être déplacé radialement dans des lumières de guidage du bâti 12 et 13. Cet axe possède un galet 14, ici intercalé entre les deux patins superposés 9 et 10, qui est logé dans une lumière 15 d'un anneau 16 susceptible de pivoter à l'intérieur du bâti 8 autour de la chemise 4. Cette lumière 15 est une lumière en forme de spirale qui permet de convertir son pivotement angulaire en un mouvement d'entraînement radial de l'axe 11. Des ressorts 11a sont interposés entre les patins 9 et 10 et l'axe 11 pour contrôler l'effort de serrage des mâchoires sur la pile 5. Le pivotement de la bague 16 sur la plage angulaire nécessaire au serrage et au desserrage des mâchoires est assuré par un actionneur du type vérin qui n'est pas représenté à la figure.

Selon l'invention, l'épaulement 7 est en fait une collerette portée par l'extrémité de doigts radiaux 17 montés à coulissement radial dans un mandrin 18 situé à l'intérieur de la chemise 4. Ces doigts, par exemple au nombre de six, sont régulièrement répartis dans ce mandrin 18 et leur extrémité est conformée de manière à présenter, outre cette collerette, une surface verticale 19 qui, dans la position représentée à la figure 3, constitue un prolongement inférieur de la surface extérieure de la chemise 4. La hauteur de cette surface 19 est légèrement supérieure à l'épaisseur totale d'un élément écarteur.

Ces doigts possèdent en retrait et au-dessus de la surface 19, une seconde surface verticale 20 qui est normalement appuyée sur la surface intérieure d'une bague d'arrêt 18a du mandrin 18 sous l'effet de ressorts 21 qui sollicitent ces doigts 17 en direction radiale vers l'extérieur du mandrin contre cette bague.

Chaque doigt 17 est équipé à son extrémité intérieure au mandrin d'une extension axiale 22 à l'extrémité de laquelle est monté tournant un galet 23. L'ensemble de ces galets est destiné à coopérer avec une surface de came 24 portée par une cloche 25 mobile axialement par rapport au mandrin 18 entre une position où la surface de came 24 est hors de contact des galets 23 et une position où elle engage ces galets provoquant ainsi la rétraction radiale de chacun des doigts 17 à l'intérieur du mandrin. Cette surface de came peut être divisée en autant de rampes séparées planes qu'il existe de galets 23. L'organe moteur déplaçant la cloche 25 par rapport au mandrin 18 ainsi que l'organe moteur qui permet de faire coulisser le mandrin 18 à l'intérieur de la chemise 4 sont schématisés par des vérins V1 et V2.

Sous la chemise 4, le dispositif de l'invention comporte également un tiroir 26 qui est monté dans un bâti non représenté pour pouvoir coulisser perpendiculairement à l'axe de cette chemise 4 entre une position où il est à l'aplomb de la chemise 4 - tel que représenté à la figure 3 - et une autre position où il est éloigné de cette chemise, par exemple dans un poste non représenté dans lequel le tiroir est dévêtu de l'écarteur qu'il porte pour être transféré dans la gorge du piston qui doit l'accueillir. Ce tiroir 26 possède au-dessus de sa face supérieure 26a une saillie 27 limitée latéralement par une surface 28 et est percé d'orifices 29 qui interrompent cette surface 28 au droit des doigts 17. Les portions de surface 28 restantes forment des appuis radiaux de réception d'un élément écarteur extrait de la colonne 5 comme cela sera décrit ci-après.

On notera enfin, revenant aux mâchoires de serrage des écarteurs contre la chemise tubulaire 4, que le patin supérieur 9 est équipé sur sa face active d'une garniture de friction 30 et que le patin inférieur 10 a sa face active 31 à un niveau tel que son bord inférieur est situé exactement en regard du bord inférieur de la chemise 4.

Le fonctionnement du dispositif selon l'invention est expliqué à partir de son état représenté à la figure 3. Dans cet état, les doigts 27 sont forcés en appui contre la bague d'arrêt 18a par les ressorts 21, le mandrin 18 est dans une position axiale par rapport à la chemise 4 telle que les surfaces 19 sont en prolongement de la surface extérieure de cette chemise si bien que la colonne 5 repose sur les collerettes 7 de ces doigts 17 sous l'effet de l'anneau pesant 6. On notera à cet endroit que les surfaces 19 peuvent être légèrement en retrait par rapport à la surface extérieure de la chemise 4. Dans cet état, le dernier élément écarteur E de la colonne 5 est entièrement porté par les doigts 17 puisqu'il repose sur l'épaulement 7 et enserre les surfaces 19 qui sont d'une hauteur légèrement plus importantes que son épaisseur. On commande alors la manoeuvre de la bague fendue 16 à l'intérieur du bâti 8 qui rapproche les mâchoires 9 et 10 de la colonne 5 pour serrer le pied de celle-ci contre la partie inférieure de la chemise 4. Le patin supérieur 9 équipé de sa garniture a pour fonction de neutraliser l'effet de l'anneau pesant 6 tandis que le patin 10 a pour unique fonction de maintenir la partie terminale de l'empilement et notamment de retenir l'avant dernier élément de cet empilement contre la partie terminale de la chemise 4.

On commande alors la descente du mandrin 18 en direction du tiroir 26. Les collerettes 7 pénètrent donc dans les orifices 29 du tiroir 26 jusqu'à ce que, entre ses orifices, l'élément E tenu par les doigts 17 prenne appui sur la surface supérieure du tiroir 26a qui prolonge chacun des appuis radiaux 28 de ce tiroir. A ce moment, la descente du mandrin s'arrête et on commande la descente, par rapport à ce mandrin, de la cloche 25. Cette descente a pour effet de rétracter les doigts vers l'intérieur du mandrin. L'élément E peut alors venir en appui contre la surface 28 du tiroir. Lorsque la rétraction est suffisante pour que les collerettes 7 soient situés à l'intérieur du cercle défini par la surface 28, on commande l'élévation du mandrin 18 à l'intérieur de la chemise 4 puis, lorsque le mandrin a atteint la position représentée à la figure 3, on commande l'élévation de la cloche 25 qui libère les doigts 17 pouvant revenir en appui contre la surface intérieure de la bague d'arrêt 18a.

On peut alors ouvrir les mâchoires en agissant sur la bague 16. La colonne 5 descend alors d'une valeur égale à l'épaisseur d'un élément écarteur et l'élément écarteur situé à sa base est transféré sur les collerettes 7 et se contracte légèrement pour prendre appui sur les surfaces 19 de chaque doigt 17. Cette contraction de l'élément E, due à son élasticité propre permet d'être assuré que le patin 10 ne vient pas prendre appui sur sa surface extérieure qui se trouve en retrait de la surface extérieure de l'élément E immédiatement supérieur et encore en appui sur la surface extérieure de la chemise 4.

Le tiroir 26 équipé d'un élément écarteur est pendant ce temps transféré au poste de segmentation du piston où il est dévêtu de cet élément au moyen de doigts qui viennent le prendre en charge.

## Revendications

1. Dispositif de dépilement d'éléments écarteurs (E) entrant dans la constitution d'un segment racleur d'huile pour un piston de moteur thermique, ces éléments étant montés en pile (5) glissants et jointifs sur la surface extérieure d'une chemise métallique verticale (4) et soumis à une force verticale de haut en bas tendant à faire descendre la pile (5) le long de la chemise (4), **caractérisé en ce qu'**il comprend :
- un mandrin (18) de préhension, dilatable et contractable radialement, situé à la base de la chemise (4), ayant une pluralité de doigts (17), chaque doigt (17) présentant une surface verticale (19) et un élément de collerette (7) à la base de cette surface verticale et en saillie radiale par rapport à celle-ci et étant mobile entre une position dans laquelle la surface verticale (19) est pratiquement dans le prolongement de la surface extérieure de la chemise (4) et une seconde position dans laquelle cette surface (19) est en retrait radial par rapport à la surface extérieure de la chemise (4),
- des moyens (V2) pour déplacer le mandrin (18) le long de l'axe de la chemise (4) entre une première position dans laquelle les doigts (17) prolongent la chemise (4) et une seconde position dans laquelle ils en sont éloignés axialement,
- un tiroir (26) d'évacuation de l'élément écarteur (E), situé dans une position de réception à l'aplomb de la chemise cylindrique (4), ce tiroir présentant des appuis radiaux (28) fixes, angulairement décalés par rapport aux doigts (17) du mandrin sur lesquels vient se contracter l'élément écarteur (E) lorsque le mandrin (18) est amené dans sa seconde position et lorsque les doigts (17) du mandrin sont dans leur position de retrait,
- des mâchoires (9, 10) extérieures de pincement contre la chemise cylindrique (4) des éléments écarteurs (E) situées au pied de la pile.

2. Dispositif selon la revendication 1, **caractérisé en ce que** chaque mâchoire comprend deux patins (9, 10) superposés verticalement, l'un au moins (9) des patins étant équipé d'une garniture anti-friction (30).

3. Dispositif selon l'une des revendications précédentes, **caractérisé en ce que** la hauteur de la surface verticale (19) de chaque doigt (17) du mandrin est légèrement supérieure à l'épaisseur à l'élément écarteur (E).

4. Dispositif selon l'une des revendications précédentes, **caractérisé en ce** chaque doigt (17) coulissant du mandrin est soumis à l'effet d'un organe élastique (21) tendant à le déplacer vers l'extérieure et possède une surface d'actionnement (23) susceptible de coopérer avec une pièce (25) en forme de cloche formant came (24) de rétraction de l'ensemble des doigts (17), à l'encontre de l'effet de l'organe élastique (21), cette cloche étant manoeuvrable par rapport au mandrin (17) le long de l'axe de la chemise cylindrique (4).

5. Dispositif selon l'une des revendications précédentes, **caractérisé en ce que** les appuis (28) du tiroir d'évacuation (26) sont prolongés radialement vers l'extérieur par un épaulement horizontal (26a) de soutien de l'élément écarteur (E).

## Patentansprüche

1. Vorrichtung zum Entstapeln von Abstandshalteelementen (E), die zur Bildung eines Ölabstreifrings für einen Kolben einer Wärmekraftmaschine dienen, wobei diese Elemente auf der Außenfläche einer vertikalen metallenen Hülse (4) verschiebbar und aneinanderstoßend in einem Stapel (5) angeordnet und einer von oben nach unten gerichteten vertikalen Kraft ausgesetzt sind, die dazu neigt, den Stapel (5) entlang der Hülse (4) abzusenken, **dadurch gekennzeichnet, daß** sie umfaßt:
- ein radial dehnbares und zusammenziehbares Spannfutter (18), das an der Basis der Hülse (4) angeordnet ist und eine Vielzahl von Fingern (17) hat, wobei jeder Finger (17) eine vertikale Fläche (19) und ein Flanschelement (7) aufweist, das an der Basis dieser vertikalen Fläche angeordnet und relativ zu derselben radial vorsteht, und zwischen einer Position, in der sich die vertikale Fläche (19) praktisch in der Verlängerung der Außenfläche der Hülse (4) befindet, und einer zweiten Position beweglich ist, in der diese Fläche (19) relativ zur Außenfläche der Hülse (4) radial zurückgezogen ist,
- Mittel (V2) zum Verschieben des Spannfutters (18) entlang der Achse der Hülse (4) zwischen einer ersten Position, in der die Finger (17) die Hülse (4) verlängern, und einer zweiten Position, in der sie axial zu derselben beabstandet sind,
- einen Schieber (26) zum Abtransportieren des Abstandshalteelements (E), der sich in einer Aufnahmeposition senkrecht unterhalb der zylindrischen Hülse (4) befindet, wobei dieser Schieber feststehende radiale Anschläge (28) aufweist, die relativ zu den Fingern (17) des Spannfutters winkelversetzt sind und auf denen das Abstandshalteelement (E) zur Anlage kommen wird, wenn das Spannfutter (18) in seine zweite Position gebracht wird und wenn die Finger (17) des Spannfutters in ihrer zurückgezogenen Position sind,
- äußere Spannbacken (9, 10) zum Klemmen der Abstandshalteelemente (E), die sich am Fuße des Stapels befinden, gegen die zylindrische Hülse (4).

2. Vorrichtung nach Anspruch 1, **dadurch gekennzeichnet, daß** jede Spannbacke aus zwei vertikal übereinander angeordneten Spannschuhen (9, 10) besteht, wobei mindestens einer (9) der Spannschuhe mit einem Antifriktionsbelag (30) versehen ist.

3. Vorrichtung nach einem der vorhergehenden Ansprüche, **dadurch gekennzeichnet, daß** die Höhe der vertikalen Fläche (19) jedes Fingers (17) des Spannfutters leicht größer als die Dicke des Abstandshalteelements (E) ist.

4. Vorrichtung nach einem der vorhergehenden Ansprüche, **dadurch gekennzeichnet, daß** jeder Gleitfinger (17) des Spannfutters der Wirkung eines elastischen Organs (21) ausgesetzt ist, das dazu neigt, diesen nach außen zu verschieben, und eine Betätigungsfläche (23) hat, die dazu geeignet ist, mit einem Teil (25) in Form einer Glocke zusammenzuwirken, das eine Nockenfläche (24) zum Zurückziehen der Gesamtheit der Finger (17) entgegen der Wirkung des elastischen Organs (21) bildet, wobei diese Glocke relativ zu dem Spannfutter (18) entlang der Achse der zylindrischen Hülse (4) bewegt werden kann.

5. Vorrichtung nach einem der vorhergehenden Ansprüche, **dadurch gekennzeichnet, daß** die Anschläge (28) des zum Abtransportieren bestimmten Schiebers (26) radial nach außen durch eine horizontale Schulter (26a) zum Halten des Abstandshalteelementes (E) verlängert sind.

## Claims

1. A device for unstacking spacer elements (E) used in making an oil scraper piston ring for an engine, said elements being mounted in a stack (5) where they touch one another and slide on the outside surface of a vertical metal jacket (4) and where they are subjected to a vertical downward force urging the stack (5) down along the jacket (4), the device being **characterized in that** it comprises:
- a radially expandable and contractible handling mandrel (18) situated at the bottom of the jacket (4) and having a plurality of fingers (17), each finger (17) presenting a vertical surface (19) and a collar element (7) at the bottom of said vertical surface and projecting radially relative thereto and being movable between a position in which the vertical surface (19) lies practically in line with the outside surface of the jacket (4) and a second position in which said surface (19) is radially set back from the outside surface of the jacket (4);
- means (V2) for moving the mandrel (18) along the axis of the jacket (4) between a first position in which the fingers (17) extend the jacket (4) and a second position in which they are axially spaced apart therefrom;
- a slider (26) for removing a spacer element (E), the slider being situated in a reception position vertically in register with the cylindrical jacket (4), said slider having fixed radial bearing surfaces (28) that are angularly offset from the fingers (17) of the mandrel against which the spacer element (E) contracts when the mandrel (18) is moved into its second position and when the fingers (17) of the mandrel are in their retracted position; and
- external jaws (9, 10) for clamping the spacer elements (E) situated at the bottom of the stack against the cylindrical jacket (4).

2. A device according to claim 1, **characterized in that** each jaw comprises two vertically superposed shoes (9, 10), at least one of the shoes (9) being fitted with an anti-friction lining (30).

3. A device according to either preceding claim, **characterized in that** the height of the vertical surface (19) of each finger (17) of the mandrel is slightly greater than the thickness of a spacer element (E).

4. A device according to any preceding claim, **characterized in that** each sliding finger (17) of the mandrel is subjected to the effect of a resilient member (21) tending to move it outwards, and possesses an actuation surface (23) suitable for co-operating with a bell-shaped part (25) constituting a cam (24) for retracting the set of fingers (17) against the effect of the resilient member (21), said bell being drivable relative to the mandrel (17) along the axis of the cylindrical jacket (4).

5. A device according to any preceding claim, **characterized in that** the bearing surfaces (29) of the removal slider (26) are extended radially outwards by a horizontal shoulder (26a) for supporting the spacer element (E).
